(19) Europäisches Patentamt
European Patent Office
Office européen des brevets

(11) **EP 1 280 229 A1**

(12) **DEMANDE DE BREVET EUROPEEN**

(43) Date de publication:
**29.01.2003 Bulletin 2003/05**

(51) Int Cl.[7]: **H01Q 1/44**, H01Q 1/32,
H01Q 15/00

(21) Numéro de dépôt: 02291696.9

(22) Date de dépôt: **05.07.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **06.07.2001 FR 0109028**

(71) Demandeur: **Thales**
**75008 Paris (FR)**

(72) Inventeurs:
• **Artis, Jean-Paul, Thales Intellectual Property**
**94117 Arcueil Cedex (FR)**
• **Dousset, Thierry, Thales Intellectual Property**
**94117 Arcueil Cedex (FR)**
• **Le Sayec, Patrick, Thales Intellectual Property**
**94117 Arcueil Cedex (FR)**

(74) Mandataire: **Dudouit, Isabelle**
**Thales Intelectual Property**
**13, avenue Président Salvador Allende**
**94117 Arcueil Cedex (FR)**

(54) **Dispositif pour cacher un radar représentant un motif en volume**

(57) La présente invention concerne un dispositif pour cacher un radar ou tout autre système d'émission et de réception d'ondes électromagnétiques, représentant par exemple un motif en volume.

Le dispositif comporte au moins une pièce avant (1) transparente aux ondes électromagnétiques et optiques, une pièce arrière (2) transparente aux ondes électromagnétiques en regard des moyens (20) et une forme (3) représentant un motif placé entre les pièces (1, 2). La forme (3) a une structure alvéolaire et est recouverte d'un revêtement.

L'invention s'applique notamment pour les radars équipant des véhicules.

MOYENS D'ÉMISSION ET/OU DE RÉCEPTION ÉLECTROMAGNÉTIQUE

FIG.1

Printed by Jouve, 75001 PARIS (FR)

**Description**

La présente invention concerne un dispositif pour cacher un radar ou tout autre système d'émission et de réception d'ondes électromagnétiques, représentant par exemple un motif en volume. Elle concerne également un radar dont le radôme est constitué d'un tel dispositif. L'invention s'applique notamment pour les radars équipant des véhicules.

Pour des raisons de sécurité notamment, il est prévu d'équiper des véhicules automobiles de radars. Un exemple de radar connu est le radar ACC, selon l'expression anglo-saxonne « Automotive Cruise Control ». Un tel radar sert en particulier à réguler la vitesse des véhicules en fonction du trafic. En d'autres termes, le radar détecte la vitesse et la distance de véhicules précédant le véhicule porteur de façon à maintenir notamment une distance minimale de sécurité entre les véhicules. Le radar peut également permettre la détermination d'obstacles sur le trajet du véhicule.

Ce radar doit donc être intégré sur l'avant de l'automobile, à une position privilégiée qui pourrait par exemple être située derrière la calandre, au droit de l'emplacement traditionnel du logo, ou emblème, du constructeur. Dans ce cas, les moyens pour cacher le radar doivent donc à la fois :

- laisser passer les ondes hyperfréquence avec une atténuation aussi faible que possible ;
- supporter un motif représentant le logo du constructeur.

En particulier ce motif peut présenter un aspect de volume, ainsi par ailleurs qu'un aspect brillant, métallique, par exemple du type chromé ou doré.

Pour présenter un aspect de volume, il est connu d'empiler des couches généralement en matière plastique présentant une complémentarité d'épaisseur de sorte que l'onde électrique émise par le radar voie une épaisseur constante de matériau sur toute la surface du motif. En d'autres termes, les variations de l'onde dues à l'atténuation ou au déphasage introduits par l'empilement de couches sont constantes sur toute la surface. Hormis une atténuation globale, les diagrammes de l'antenne du radar ne sont pas ou peu affectés.

Les effets de volume liés à ce procédé ont une amplitude liée à l'épaisseur globale du motif et de ce fait sont rapidement limités. En effet, dans la bande millimétrique correspondant aux fréquences utilisées notamment pour les radars ACC, les pertes hyperfréquences correspondant aux matériaux plastiques augmentent rapidement avec l'épaisseur du matériau traversé.

Enfin, pour des raisons économiques évidentes, un logo ou toute autre partie rapportée sur un véhicule doit présenter un coût le plus faible possible.

Un but de l'invention est de pallier les inconvénients précités, notamment de permettre la réalisation d'un dispositif pour cacher un radar présentant un aspect de volume avec de faibles pertes hyperfréquence.

A cet effet, l'invention a pour objet un dispositif pour cacher des moyens d'émission et/ou de réception d'une onde électromagnétique, caractérisé en ce qu'il comporte au moins une pièce avant transparente aux ondes électromagnétiques et optiques, une pièce arrière transparente aux ondes électromagnétiques en regard des moyens d'émission et une forme représentant un motif placé entre les pièces la forme ayant une structure alvéolaire.

La structure alvéolaire est par exemple une mousse à propriétés radioélectriques proches de l'air. La forme peut être recouverte d'un revêtement d'aspect brillant.

Avantageusement, la distance entre les pièces arrière et avant est telle que les ondes réfléchies par chacune d'elles se retrouvent proches de l'opposition de phase.

La loi de phase peut avantageusement être optimisée par compensation du déphasage créé par le motif, par une variation de l'épaisseur en regard de la forme d'une des pièces avant et arrière, ou des deux à la fois.

Avantageusement, le dispositif comporte un orifice d'égalisation de la pression entre l'intérieur et l'extérieur, de façon à éviter les entrées d'humidité et la formation de condensation.

Le motif peut bien sûr représenter le logo d'un constructeur automobile.

L'invention a également pour objet un radar équipant un véhicule dont le radôme est constitué par le dispositif précédent.

D'autres caractéristiques et avantages de l'invention apparaîtront à l'aide de la description qui suit faite en regard de dessins annexés qui représentent :

- la figure 1, un mode de réalisation possible d'un dispositif selon l'invention, le dispositif étant en regard d'un système d'émission et/ou de réception électromagnétique qu'il protège ;
- les figures 2 et 3, deux exemples de réalisation du revêtement recouvrant la surface d'une forme utilisée dans un dispositif selon l'invention, notamment pour donner à cette forme un aspect brillant ;
- la figure 4, un autre mode de réalisation possible d'un dispositif selon l'invention.

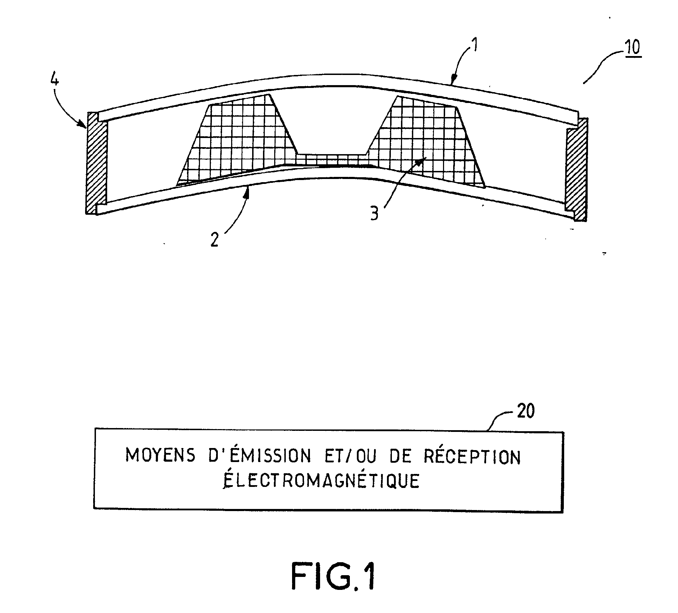

La figure 1 illustre un mode de réalisation possible d'un dispositif 10 selon l'invention pour cacher un radar. A titre d'exemple, on se place dans le cas où ce dispositif comporte un motif représentant le logo d'un constructeur automobile, le radar équipant par ailleurs une automobile. Bien entendu, un dispositif selon l'invention peut comporter tout autre motif et cacher d'autres types de radar ou de moyens d'émission et/ou réception d'ondes électromagnétiques 20. Un dispositif 10 selon l'invention utilise notamment deux plaques 1, 2 entre lesquels est insérée une forme 3 représentant un motif en volume, c'est-à-dire présentant essentiellement une épaisseur non négligeable. L'épaisseur n'est par exemple pas uniforme de façon à représenter notamment une forme donnée tel qu'un logo.

Le dispositif 10 comporte donc une plaque avant 1 transparente aux ondes hyperfréquence et aux ondes optiques. En ce qui concerne les ondes optiques, elle est au moins en matériau translucide. Cette plaque avant 1 est par exemple en matériau plastique transparent, tel que notamment du polycarbonate. Le dispositif 10 comporte par ailleurs une plaque arrière 2, en regard des moyens d'émission et/ou de réception électromagnétique 20, transparente aux ondes hyperfréquence. Cette plaque peut être teintée en fonction d'un effet recherché, il s'agit notamment de représenter un fond sur lequel se situe le motif. Ce fond peut aussi bien être sombre ou brillant, ou les deux à la fois, ou encore représenter tout autre motif plan. De préférence les plaques 1, 2 sont parallèles entre elles. Elles sont par exemple courbes en relation avec le profil avant d'un véhicule. Elles représentent ainsi par exemple une portion de sphère ou de cylindre.

Les faces avant et arrière 1, 2 sont de préférence aussi identiques que possible en ce qui concerne leurs propriétés radioélectriques. Leur épaisseur est par exemple proche ou sensiblement égale à l'épaisseur d'adaptation définie par un multiple de la demi-longueur d'onde dans le matériau considéré en incidence normale. Cette épaisseur d'adaptation $e_0$ est donnée par la relation suivante :

$$e_0 = \frac{k\lambda_0}{2\sqrt{(\varepsilon_r - \sin^2\theta)}} \qquad (1)$$

où $\lambda_0$ représente la longueur de l'onde hyperfréquence dans l'air, $\varepsilon_r$ la constante diélectrique du matériau de la forme 3 et $\theta$ l'angle moyen d'incidence de l'onde par rapport à la surface traversée.

La forme 3 placée dans l'espace libre entre les plaques avant et arrière 1, 2 représente, ou comporte, le motif. Ce dernier est par exemple le logo d'un constructeur automobile. Cette forme 3 est constituée d'un matériau de faibles pertes et de faible constante diélectrique. Avantageusement, ce matériau est un matériau à structure alvéolaire, par exemple du type mousse. Ainsi ce matériau est par exemple un mousse à cellules fermées de type polystyrène, acrylique ou polyuréthane. En particulier des mousses polyméthacrylimides peuvent très bien convenir. Plus généralement, les structures ou les mousses choisies présentent des caractéristiques radioélectriques proches de celle de l'air avec notamment une constante diélectrique relative $\varepsilon_r$ très proche de 1 et de préférence une tangente $\delta$ très faible, par exemple inférieure à 0,001. De ce fait, les ondes sont peu affectées en traversant ce type de matériau.

La forme 3 est par exemple collée sur l'une des plaques 1, 2, de préférence sur la plaque arrière 2. Tout autre moyen de fixation est bien sûr possible.

Le motif ne recouvre pas nécessairement toute la surface éclairée par le radar 20, où tout autre moyen d'émission / réception, la protection étant assurée notamment par les plaques 1, 2.

Avantageusement, la forme 3 peut être recouverte sur tout ou partie de sa surface de peinture ou d'un revêtement de faibles pertes diélectriques. En vue notamment de présenter un aspect brillant, elle peut être recouverte d'un film d'aspect brillant tel que par exemple un film utilisé pour opacifier des vitres de bâtiment ou pour réaliser des réflecteurs d'éclairage électriques.

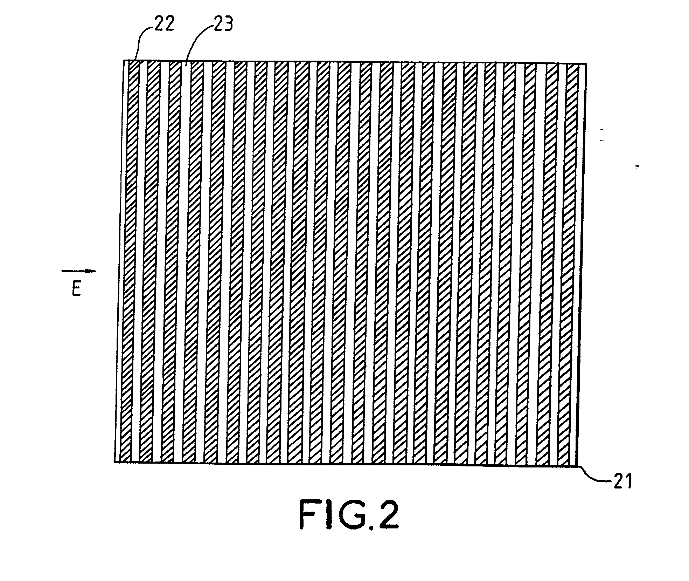

La figure 2 illustre un autre exemple de revêtement 21 appliqué sur la forme 3. Ce revêtement 21 présente un aspect brillant. A cet effet, ce revêtement comporte un réseau de zones conductrices 22 ayant une direction sensiblement perpendiculaire à la polarisation de l'onde émise par le radar 20, c'est-à-dire une direction perpendiculaire au champ électrique $\vec{E}$ de l'onde. Du fait de la faible longueur d'onde de la bande allouée à un radar automobile par exemple, le réseau de fils peut être extrêmement fin et dense, et ainsi reproduire fidèlement un aspect brillant tel que réalisé en continu. En particulier, le réseau de fils peut alors donner un aspect brillant similaire à celui du chrome plein ou continu tel qu'utilisé habituellement. De préférence, notamment pour des simplifications de réalisation, le réseau de fils est constitué sur toute la surface du revêtement 21. Ce réseau est fixé sur un support transparent aux ondes hyperfréquence. Ce support est par ailleurs souple de façon à épouser la forme 3. A titre d'exemple, la largeur des zones conductrices 22, ou fils, peut être de l'ordre de 0,15mm, de même que l'espacement 23 entre deux bords de zones ou de fils consécutifs. Une telle disposition des fils du réseau introduit des pertes hyperfréquence ainsi qu'une rotation de phase négligeables, ce qui permet de ne pas modifier notablement les caractéristiques de rayonnement de l'antenne du radar.

Ce réseau de fils 22 peut être déposé sur le support par toute technique de métallisation ou de gravure. La précision de gravure demandée est compatible de techniques utilisables pour des productions en grande série. Compte tenu notamment de la faible influence de la résistivité d'un fil conducteur 22 dans le processus de l'onde, le réseau de fils peut présenter une grande variété de métaux dont en particulier le chrome, le cuivre, l'argent ou l'or. Les fils conducteurs peuvent ainsi être constitués de ces métaux, ou recouverts de ces métaux. Cela permet notamment de rendre des effets variés et de reproduire notamment une grande quantité de logos. Avantageusement, la plaque avant 1 protège le réseau de fils contre les agressions extérieures, climatiques ou mécaniques notamment.

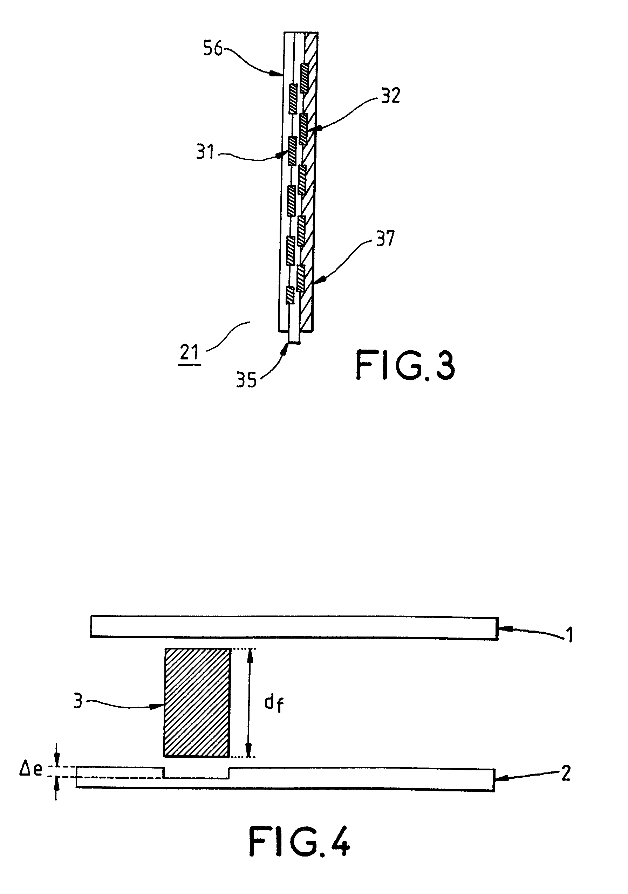

La figure 3 illustre un autre mode de réalisation possible d'un revêtement à base de réseau de fils. Le réseau de fils tel que décrit relativement à la figure 2 peut donner un aspect qui pourrait être jugé insuffisamment brillant du fait de la présence de zones 23 non métallisées. Il est possible de réaliser un revêtement 21 présentant un aspect brillant continu, ou s'en rapprochant, en superposant au moins deux réseaux de fils 31, 32, par exemple décalés, les fils étant parallèles. Les deux réseaux sont ainsi par exemple décalés d'un demi pas. Ainsi si la largeur d'un fil est par exemple de 0,15mm et la largeur de l'espacement entre fils est de 0,15mm, le pas vaut 0,30mm. Plus généralement, un pas du réseau correspond à la largeur d'un fil 22 plus la largeur d'un espacement 23. Le premier réseau de fils 31 est donc séparé du deuxième réseau de fils 32 par un support médian 35 souple, et transparent aux ondes optiques et aux ondes hyperfréquence. Le premier réseau de fils 31 est par exemple fixé sur le substrat médian 35, par exemple par métallisation. Le deuxième réseau de fils 32 est par exemple fixé sur le un substrat de fond 37, par exemple par métallisation. Avantageusement, un courant électrique peut parcourir l'ensemble ou une partie des fils 42 du réseau. L'échauffement des fils ainsi produit peut permettre notamment un dégivrage du logo, en particulier de la partie brillante, et rendre ainsi cette dernière bien visible, en particulier dans des conditions climatiques hivernales. L'échauffement des fils peut aussi notamment éviter la condensation. Dans le cas où plusieurs réseaux sont superposés, tous les réseaux peuvent être parcourus par un courant ou seulement le réseau 31 orienté vers l'extérieur.

Une pièce 4, par exemple un cadre ou une entretoise, assure le maintien mécanique des plaques avant et arrière, ainsi que la fixation de l'ensemble sur le véhicule. Les plaques 1, 2 et le cadre 4 sont de préférence assemblés de manière étanche par exemple par collage. Dans une des pièces, par exemple dans le cadre 4 un passage de mise à l'air libre peut être aménagé, éventuellement complétée d'une membrane étanche à la vapeur d'eau permettant un équilibrage des pressions interne et externe de façon à éviter toute accumulation d'humidité susceptible de provoquer de la condensation.

La pièce 4 permet donc de maintenir les plaques 1, 2 à une distance donnée. Cette distance est de préférence choisie de façon à ce que l'onde de retour de la plaque avant 1 soit en opposition de phase avec celle de la plaque arrière 2. Les plaques 1, 2 étant conçues pour être identiques radioélectriquement, il s'ensuit une annulation ou au moins une minimisation des ondes de retour et de ce fait une minimisation des pertes de désadaptation de l'ensemble. L'écartement d entre les deux plaques est ainsi par exemple sensiblement identique à la distance $d_0$ donnée par la relation suivante :

$$d_0 = \frac{(2K+1)\lambda_0}{4 - e\lambda_0/\lambda_m} \qquad (2)$$

où comme précédemment $\lambda_0$ représente la longueur de l'onde hyperfréquence dans l'air, et $\lambda_m$ représente la longueur d'onde dans le matériau constituant les plaques 1, 2 et e l'épaisseur entre ces dernières.

L'assemblage des pièces 1, 2, 4 est indicatif. D'autres modes d'assemblage sont bien sûr possible, en particulier en fonction des contraintes de montage ou de fabrication. En particulier, la plaque arrière 2 et le cadre 4 peuvent former une seule et même pièce.

La figure 4 illustre un autre mode de réalisation d'un dispositif selon l'invention qui prend en compte les différences de chemin d'une onde électromagnétique entre les deux plaques 1, 2. En particulier, il se peut que les caractéristiques radioélectriques ou la configuration de la forme 3 soit telle qu'une onde traversant cette dernière subisse un déphasage par rapport à un trajet dans l'air. Dans ce cas, il est possible de jouer sur l'épaisseur de l'une des plaques au moins, de préférence la plaque arrière 2, pour compenser ce déphasage. Ainsi, en fonction de la forme 3 l'épaisseur de la plaque du fond peut par exemple être diminuée d'une épaisseur $\Delta e$ pour rattraper le déphasage provoqué par la forme. Cette variation d'épaisseur $\Delta e$ à appliquer est par exemple proche ou sensiblement égale à la variation $\Delta e_0$ donnée par la relation suivante :

$$\Delta e = \frac{\Delta\phi.\lambda_0}{2\pi\sqrt{\varepsilon_m}} \qquad (3)$$

où $\lambda_0$ représente toujours la longueur de l'onde hyperfréquence dans l'air, et $\varepsilon_m$ représente la constante diélectrique du matériau constituant la plaque et $\Delta\Phi$ représente l'écart de phase à rattraper.

Cet écart de phase est approximativement donné par la relation suivante :

$$\Delta\Phi = \frac{2\pi.d_f.\sqrt{\varepsilon_v - 1}}{\lambda_0} \qquad (4)$$

où $d_f$ représente l'épaisseur de la forme 3 et $\varepsilon_v$ la constante diélectrique du matériau de cette forme 3.

Avantageusement, la variation d'épaisseur $\Delta e$ permet de faciliter le montage et le positionnement de la forme 3 sur la plaque arrière 2.

La variation d'épaisseur en creux peut être réalisée sur la plaque arrière 2 mais aussi sur la plaque avant 1, ou sur les deux à la fois.

Un dispositif tel que décrit précédemment peut par exemple protéger un radar ACC. Il peut aussi constituer le radôme de tout autre type de radar équipant un véhicule automobile, par exemple situé à l'avant de ce dernier.

**Revendications**

1. Dispositif pour cacher des moyens (20) d'émission et/ou de réception d'une onde électromagnétique, **caractérisé en ce qu'**il comporte au moins une pièce avant (1) transparente aux ondes électromagnétiques et optiques, une pièce arrière (2) transparente aux ondes électromagnétiques en regard des moyens (20) et une forme (3) représentant un motif placée entre les pièces (1, 2), la forme (3) ayant une structure alvéolaire.

2. Dispositif selon la revendication 1, **caractérisé en ce que** la structure alvéolaire présente des caractéristiques radioélectriques proches de celles de l'air.

3. Dispositif selon l'une quelconque des revendications précédentes, **caractérisé en ce que** la structure alvéolaire est une mousse.

4. Dispositif selon l'une quelconque des revendications précédentes, **caractérisé en ce que** la surface de la forme (3) est recouverte d'un revêtement.

5. Dispositif selon la revendication 4, **caractérisé en ce que** le revêtement est d'aspect brillant.

6. Dispositif selon la revendication 5, **caractérisé en ce que** le revêtement (21) comporte au moins un réseau de fils conducteurs (22) sensiblement perpendiculaires à la polarisation de l'onde électromagnétique.

7. Dispositif selon la revendication 6, **caractérisé en ce que** le revêtement (21) comporte au moins deux réseaux de fils (31, 32) superposés parallèles.

8. Dispositif selon la revendication 7, **caractérisé en ce que** les deux réseaux sont décalés d'un demi-pas.

9. Dispositif selon l'une quelconque des revendications 6 à 7, **caractérisé en ce qu'**au moins une partie des fils sont parcourus par un courant électrique pour réaliser un échauffement.

10. Dispositif selon la revendication 5, **caractérisé** en ce le revêtement est un film brillant.

11. Dispositif selon l'une quelconque des revendications précédentes, **caractérisé en ce qu'**il comporte un passage d'air pour égaliser les pressions entre l'extérieur et l'intérieur.

12. Dispositif selon la revendication 11, **caractérisé en ce que** le passage est complété d'une membrane étanche à la vapeur d'eau.

13. Dispositif selon l'une quelconque des revendications précédentes, **caractérisé en ce que** les pièces avant et arrière (1, 2) sont sensiblement parallèles entre elles.

14. Dispositif selon l'une quelconque des revendications précédentes, **caractérisé en ce que** les pièces avant et arrière (1, 2) sont courbes en relation avec le profil avant d'un véhicule.

15. Dispositif selon l'une quelconque des revendications précédentes, **caractérisé en ce que** les pièces avant et arrière (1, 2) sont séparées d'une distance telle que les ondes réfléchies par chacune d'elles se retrouvent sensiblement d'égale amplitude et en opposition de phase.

16. Dispositif selon l'une quelconque des revendications précédentes, **caractérisé en ce qu'**une variation d'épaisseur ($\Delta e$) est crée, en regard de la forme (3), sur au moins une des pièces avant (1) ou arrière (2) pour compenser le déphasage créé par la forme (3).

17. Dispositif selon la revendication 16, **caractérisé en ce que** la variation est en creux.

18. Dispositif selon l'une quelconque des revendications précédentes, **caractérisé** en ce la forme (3) est en mousse polyméthacrylimides.

19. Dispositif selon l'une quelconque des revendications 1 à 18, **caractérisé en ce que** la forme (3) est en mousse du type polystyrène, acrylique ou polyuréthane.

20. Dispositif selon l'une quelconque des revendications précédentes, **caractérisé en ce que** le motif représente le logo d'un constructeur de véhicules.

21. Radar équipant un véhicule, **caractérisé en ce que** son radôme est constitué d'un dispositif selon l'une quelconque des revendications précédentes.

22. Radar selon la revendication 21, **caractérisé en ce qu'**il est placé à l'avant du véhicule.

MOYENS D'ÉMISSION ET/OU DE RÉCEPTION ÉLECTROMAGNÉTIQUE

FIG.1

FIG.2

FIG.3

FIG.4

**Office européen**
**des brevets**

**RAPPORT DE RECHERCHE EUROPEENNE**

Numéro de la demande

EP 02 29 1696

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 1 045 471 A (HONDA MOTOR CO LTD) 18 octobre 2000 (2000-10-18) * le document en entier * | 1-3, 20-22 | H01Q1/44 H01Q1/32 H01Q15/00 |
| Y | DE 197 12 098 A (BOSCH GMBH ROBERT) 14 mai 1998 (1998-05-14) * le document en entier * | 1-3, 20-22 | |
| A | DE 198 30 811 A (MITSUBISHI ELECTRIC CORP) 2 septembre 1999 (1999-09-02) * le document en entier * | 1-22 | |
| A | US 3 794 997 A (NISHIBU M ET AL) 26 février 1974 (1974-02-26) * figures 4-6 * | 1-22 | |
| A | WO 89 01709 A (CHADIMA GEORGE E JR) 23 février 1989 (1989-02-23) * page 7 - page 8; figures 4A-4B,8,9 * | 1-22 | |
| P,X | US 2002/011946 A1 (ARTIS JEAN-PAUL ET AL) 31 janvier 2002 (2002-01-31) * le document en entier * | 1,4-17, 20-22 | DOMAINES TECHNIQUES RECHERCHES (Int.Cl.7) H01Q |

Le présent rapport a été établi pour toutes les revendications

| Lieu de la recherche | Date d'achèvement de la recherche | Examinateur |
|---|---|---|
| LA HAYE | 12 septembre 2002 | Wattiaux, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

**ANNEXE AU RAPPORT DE RECHERCHE EUROPEENNE
RELATIF A LA DEMANDE DE BREVET EUROPEEN NO.**  EP 02 29 1696

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-09-2002

| Document brevet cité au rapport de recherche | | Date de publication | Membre(s) de la famille de brevet(s) | | Date de publication |
|---|---|---|---|---|---|
| EP 1045471 | A | 18-10-2000 | JP | 2000304847 A | 02-11-2000 |
| | | | EP | 1045471 A1 | 18-10-2000 |
| DE 19712098 | A | 14-05-1998 | DE | 19712098 A1 | 14-05-1998 |
| DE 19830811 | A | 02-09-1999 | JP | 11231041 A | 27-08-1999 |
| | | | DE | 19830811 A1 | 02-09-1999 |
| US 3794997 | A | 26-02-1974 | AUCUN | | |
| WO 8901709 | A | 23-02-1989 | US | 4788550 A | 29-11-1988 |
| | | | AU | 2384788 A | 09-03-1989 |
| | | | EP | 0377648 A1 | 18-07-1990 |
| | | | JP | 3501433 T | 28-03-1991 |
| | | | WO | 8901709 A1 | 23-02-1989 |
| US 2002011946 | A1 | 31-01-2002 | FR | 2810455 A1 | 21-12-2001 |
| | | | EP | 1168489 A1 | 02-01-2002 |
| | | | JP | 2002040132 A | 06-02-2002 |

EPO FORM P0460

Pour tout renseignement concernant cette annexe : voir Journal Officiel de l'Office européen des brevets, No.12/82